# EUROPEAN PATENT SPECIFICATION

(11) **EP 4 170 872 B1**
(45) Date of publication and mention of the grant of the patent: **07.10.2026**
(21) Application number: 21945379.2
(22) Date of filing: 03.11.2021
(51) Int. Cl.: H02K 5/16, H02K 15/14, F16C 19/06, F16C 33/80, F16C 35/063, H02K 5/10

(54) **MOTOR STRUCTURE AND BEARING REPLACEMENT METHOD THEREFOR**
MOTORSTRUKTUR UND LAGERAUSTAUSCHVERFAHREN DAFÜR
STRUCTURE DE MOTEUR ET PROCÉDÉ DE REMPLACEMENT DE ROULEMENT

(30) Priority: 25.08.2021 CN 202110981731
(43) Date of publication of application: 26.04.2023
(73) Proprietor: CRRC Zhuzhou Electric Co., Ltd., Zhuzhou, hunan 412000 (CN)
(72) Inventor: ZHOU, Limin, Zhuzhou, Hunan 412000 (CN); HU, Gui, Zhuzhou, Hunan 412000 (CN); SHEN, Zheng, Zhuzhou, Hunan 412000 (CN); TANG, Zimou, Zhuzhou, Hunan 412000 (CN); GONG, Tianming, Zhuzhou, Hunan 412000 (CN); TANG, Liming, Zhuzhou, Hunan 412000 (CN); WANG, Jibin, Zhuzhou, Hunan 412000 (CN); DENG, Sha, Zhuzhou, Hunan 412000 (CN); WANG, Wei, Zhuzhou, Hunan 412000 (CN); ZHOU, Xiang, Zhuzhou, Hunan 412000 (CN); WANG, Yihui, Zhuzhou, Hunan 412000 (CN); YANG, Min, Zhuzhou, Hunan 412000 (CN); HE, Weilin, Zhuzhou, Hunan 412000 (CN); LI, Guang, Zhuzhou, Hunan 412000 (CN); ZHANG, Chengcheng, Zhuzhou, Hunan 412000 (CN); DENG, Xianping, Zhuzhou, Hunan 412000 (CN); MEI, Ronghai, Zhuzhou, Hunan 412000 (CN); YUAN, Bo, Zhuzhou, Hunan 412000 (CN); HUANG, Hongchen, Zhuzhou, Hunan 412000 (CN); YANG, Yanhe, Zhuzhou, Hunan 412000 (CN)
(74) Representative: Reddie & Grose LLP
(86) International application number: PCT/CN2021/128376
(87) International publication number: WO 2023/024263

(56) References cited:
- EP-A1- 3 007 331
- WO-A1-2021/136834
- CN-A- 103 168 411
- CN-A- 106 015 352
- CN-A- 107 852 062
- CN-A- 110 695 920
- CN-A- 110 829 746
- JP-A- 2008 099 491
- JP-A- 2015 208 163
- US-A1- 2018 183 296
- US-B2- 8 922 075

## Description

The present application claims the priority to Chinese Patent Application No. 202110981731.9, titled "MOTOR STRUCTURE AND BEARING REPLACEMENT METHOD THEREOF", filed with the China National Intellectual Property Administration on August 25, 2021.

### FIELD

The present application relates to the technical field of rail transit, and in particular to a motor structure and a bearing replacement method thereof.

### BACKGROUND

With the rapid development of rail transportation, the operation and maintenance requirements and technical level of rail vehicles are constantly increasing. The working status and maintenance requirements of components in the vehicle are different, and the bearing on the traction motor is a crucial stressed member. In order to ensure the safe operation of the vehicle, the maintenance of the bearing is extremely critical, and the bearing must be tested or replaced within a specified time period or kilometers.

The structural arrangement of the conventional traction motor results in a complicated disassembly process of bearing, in which the motor must be first disassembled to separate the stator from the rotor, and then the bearing is pulled out from a bearing housing to complete the detection or replacement work. The entire disassembly cycle is long, the process is cumbersome, a specific site and special tooling are required, and the maintenance cost and maintenance resource consumption are huge.

Therefore, without affecting the basic functions and performance of the motor, how to provide a universal motor structure that facilitates of maintenance has become an important technical problem to be solved urgently by the technicians in this field.

WO 2021136834 A1 describes an electric machine comprising a stator, a rotor and a bearing assembly. The stator includes a bearing shield assembly comprising a bearing shield and a fixed labyrinth seal ring having a tortuous labyrinth surface. The rotor includes a rotor shaft and a rotatable labyrinth seal ring having a tortuous labyrinth surface facing the tortuous labyrinth surface of the fixed labyrinth seal ring at a first axial distance. The bearing shield assembly is provided with a fixed contact face and the rotor further includes an opposite contact face axially facing a fixed contact face of the bearing shield assembly at a second axial distance, which is shorter than the first axial distance.

### SUMMARY

In view of this, a simple, universal and reliable motor structure is provided according to the present invention, which uses the general parts of the motor to solve the above defects without affecting the original effects and functions of the parts, and has the characteristics of high maintenance efficiency, simple operation and low maintenance manpower intensity.

In order to achieve the above object, the following technical solution is provided according to the present invention:
a motor structure, including a transmission shaft, a transmission-side (shaft extension end) component and a non-transmission-side component;
the transmission-side assembly includes: a transmission-side inner oil seal, a support ring, a transmission-side cover, a shaft sleeve and a cylindrical bearing; the support ring is sleeved in the transmission shaft; an outer peripheral surface of an inner end of the support ring proximal to the transmission-side inner oil seal is provided with a first inclined surface, a distance between the first inclined surface and the transmission shaft is gradually reduced in a direction towards the transmission-side inner oil seal, and an angle A is formed between the first inclined surface and an axis of the transmission shaft, an inner wall of a bearing reservoir formed by the transmission-side cover towards the support ring and proximal to the transmission-side inner oil seal is provided with a second inclined surface parallel to the first inclined surface , in an assembled state, a distance between the first inclined surface and the second inclined surface is Δ1; a first inner end surface of the support ring is abutted against a first step of the transmission shaft, and there is a gap between the first inner end surface and a second outer end surface of the transmission-side inner oil seal; a first outer end surface of the support ring is connected to the shaft sleeve; the cylindrical bearing is interposed between the transmission-side cover and the shaft sleeve, and an inner end of the cylindrical bearing is abutted with the shaft sleeve; the shaft sleeve is sleeved in the transmission shaft.

The non-transmission-side assembly includes: a non-transmission-side cover, a ball bearing and a non-transmission-side shaft sleeve; the non-transmission-side shaft sleeve is sleeved in the transmission shaft; a third inner end surface of the non-transmission-side shaft sleeve is abutted against a third step of the transmission shaft; the transmission shaft is provided with a third inclined surface, close to the third step with a same inclination direction as the first inclined surface and an angle B, an inner wall of a tail of the non-transmission-side cover is provided with a fourth inclined surface parallel to the third inclined surface; in the assembled state, a distance between the third inclined surface and the fourth inclined surface is Δ2; the ball bearing is interposed between the non-transmission-side cover and the non-transmission-side shaft sleeve, and the inner end of the ball bearing is abutted against a step of the shaft sleeve of the non-transmission-side shaft sleeve;
the angle A is less than or equal to the angle B, the opening of the angles are both directed to the transmission side, the distance Δ1 = Δ2, and Δ1 is not less than a radial labyrinth gap between the transmission-side inner oil seal and the transmission-side cover, Δ2 is not less than a radial labyrinth gap between the non-transmission-side cover and the non-transmission-side shaft sleeve.

Preferably, a distance L0 between the inner wall end surface of the bearing reservoir of the transmission-side cover and an inner end surface of the inner ring of the cylindrical bearing is greater than Δ2/sin B.

Preferably, a second inner end surface of the transmission-side inner oil seal is abutted against the second step of the transmission shaft.

Preferably, an outer wall of the transmission-side shaft sleeve and an outer wall of the non-transmission-side shaft sleeve are both provided with disassembly and assembly structures. The disassembly and assembly structure includes:
an external thread arranged on an outer wall of the shaft sleeve and between the first inclined surface and the first outer end face;
a groove arranged on an inner wall of the non-transmission-side shaft sleeve and close to the third outer end surface of the non-transmission-side shaft sleeve.

Preferably, the transmission-side assembly further includes: a cylindrical bearing accessory abutted against an outer end of the cylindrical bearing;
the cylindrical bearing accessory includes: a transmission-side bearing cover, a transmission-side outer oil seal and a transmission-side bearing outer cover;
the transmission-side bearing outer cover is mounted at the outer end of the transmission-side outer oil seal.

Preferably, the non-transmission-side assembly further includes: a ball bearing accessory abutted against an outer end of the ball bearing;
the ball bearing accessory includes: a non-transmission-side bearing outer cover, a non-transmission-side bearing cover, and a non-transmission-side outer oil seal;
the non-transmission-side bearing cover and the non-transmission-side outer oil seal are abutted against the outer end of the ball bearing; the non-transmission-side bearing cover is provided with a first connecting hole for connecting with the rotating shaft; the non-transmission-side outer oil seal is provided with a second connecting hole for connecting with the non-transmission-side cover; the non-transmission-side bearing outer cover is mounted at the outer ends of the non-transmission-side bearing cover and the non-transmission-side outer oil seal.

A motor bearing replacement method, which is applied to the motor structure as described above, including:
pulling out the ball bearing first to move the rotating shaft toward the non-transmission-side synchronously until the first inclined surface of the support ring is in contact with the second inclined surface of the transmission-side cover; the third inclined surface is in contact with the fourth inclined surface of the non-transmission-side cover.

Then the cylindrical bearing is disassembled.

Preferably, the step of disassembling the ball bearing further includes:
the rotating shaft is moved toward the non-transmission side to the position where the rotor completes is centering and fixed.

Preferably, before moving the rotating shaft toward the non-transmission side, the method further includes:
disassembling the transmission-side bearing outer cover, the non-transmission-side bearing outer cover, the transmission-side outer oil seal, non-transmission-side outer oil seal, the transmission-side bearing cover and the non-transmission-side bearing cover.

It can be seen from the above technical solution that the motor structure provided by the present application has the following advantages:
1) the general structure of almost all motors can be used to limit the radial and axial directions of the rotor, and thus the motor structure is compact, simple and reliable, and the manufacturability is good;
2) the operation of pulling out the ball bearing and positioning and fixing to the rotor are completed synchronously, which is simple and reliable;
3) the motor structure provided by the present application is not limited to the type of motor, and is applicable to all motors (types of fully closed and open, permanent magnet synchronous or squirrel cage asynchronous).

A motor bearing replacement method based on the above structure is further provided according to the present application, wherein the rotor can be synchronously positioned and supported when pulling the positioning end bearing, and thus the operation is simple.

### BRIEF DESCRIPTION OF THE DRAWINGS

For more clearly illustrating the technical solutions of embodiments of the present application or in the conventional technology, drawings referred to for describing the embodiments or the conventional technology will be briefly described hereinafter. Apparently, the drawings in the following description are only several examples of the present application, and for those skilled in the art, other drawings may be obtained based on these drawings without any creative efforts.
FIG. 1 is a schematic view of an assembly state of a motor structure provided by an embodiment of the present application;
FIG. 2 is an enlarged view of a transmission-side assembly in FIG. 1;
FIG. 3 is a partial enlarged view of the transmission-side assembly in FIG. 1;
FIG. 4 is a schematic view of an inclined surface fit structure of a support ring and a transmission-side cover provided by an embodiment of the present application;
FIG. 5 is an enlarged view of a non-transmission-side assembly in FIG. 1;
FIG. 6 is a partial enlarged view of the non-transmission-side assembly in FIG. 1;

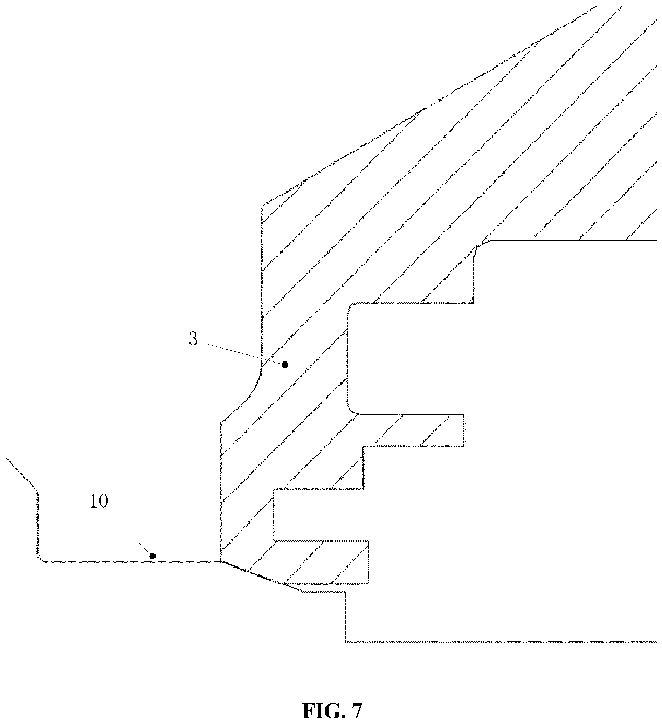

FIG. 7 is a schematic view of an inclined surface fit structure of a non-transmission-side cover and a rotating shaft provided by the embodiment of the present application;

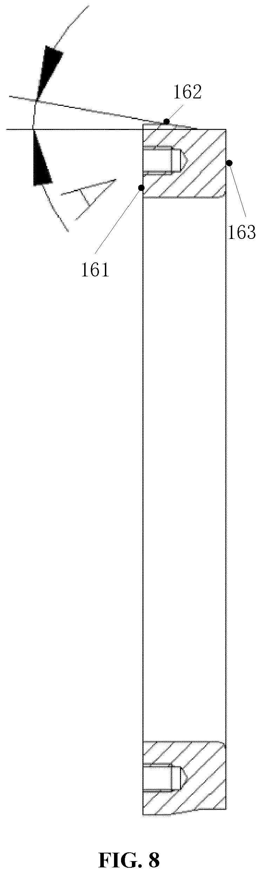

FIG. 8 is a schematic view of a support ring provided by the embodiment of the present application;

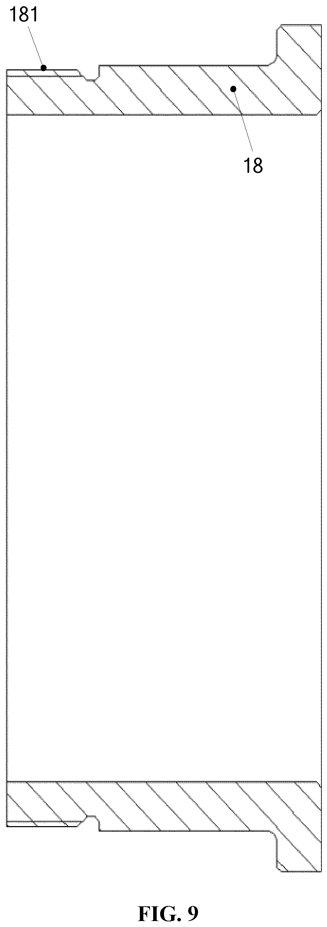

FIG. 9 is a schematic view of a shaft sleeve provided by the embodiment of the present application;

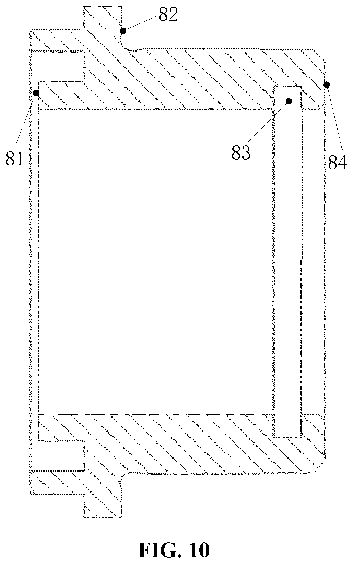

FIG. 10 is a schematic view of a non-transmission-side shaft sleeve provided by the embodiment of the present application;
FIG. 11 is a structural view of the motor provided by the embodiment of the present application during disassembly, in which cylindrical bearing accessories and ball bearing accessories are pulled out, and the rotor is fixed; and
FIG. 12 is a structural view of the motor provided by the embodiment of the present application during disassembly, in which the bearing is pulled out, and the rotor is fixed.

Reference numerals in the drawings: 1 - base; 2-coil; 3 - non-transmission-side cover, 31 - fourth inclined surface; 4-end ring; 5 - non-transmission-side bearing outer cover; 6 - non-transmission-side bearing cover; 7- ball bearing; 8- non-transmission-side sleeve, 81- third inner end face, 82- step of the shaft sleeve, 83- groove, 84- third outer end face; 9- non-transmission-side outer oil seal; 10- rotating shaft, 101- first step, 102- second step, 103- third step, 104- third inclined surface; 11- rotor pressing ring; 12- rotor; 13- stator; 14- transmission-side inner oil seal, 141- second outer end face, 142- second inner end face; 15- grease; 16-support ring, 161- first outer end face, 162- first inclined surface, 163- first inner end face; 17-transmission-side cover; 18- transmission-side sleeve, 181- external thread; 19- cylindrical bearing; 20- transmission-side bearing cover; 21- transmission-side outer oil seal; 22-transmission-side bearing outer cover.

### DETAILED DESCRIPTION OF THE EMBODIMENTS

A structure and a method for pulling out the bearing without separating the stator and rotor of the motor is provided according to the present application, so that the motor does not need to be returned to depot, and the disassembly and replacement of the bearing can be completed only by a simple common bearing disassembly tool.

The technical solution of the present application not only reduces the transportation cost, the overhaul period and resource allocation requirements of overhaul or corrective maintenance, but also greatly reduces the labor intensity of operators, improves the efficiency of overhaul or corrective maintenance, and improves the technical level of operation and maintenance.

Technical solutions in the embodiments of the present invention are clearly and completely described hereinafter in conjunction with the drawings in the embodiments of the present application. Apparently, the embodiments described in the following are only some embodiments of the present invention.

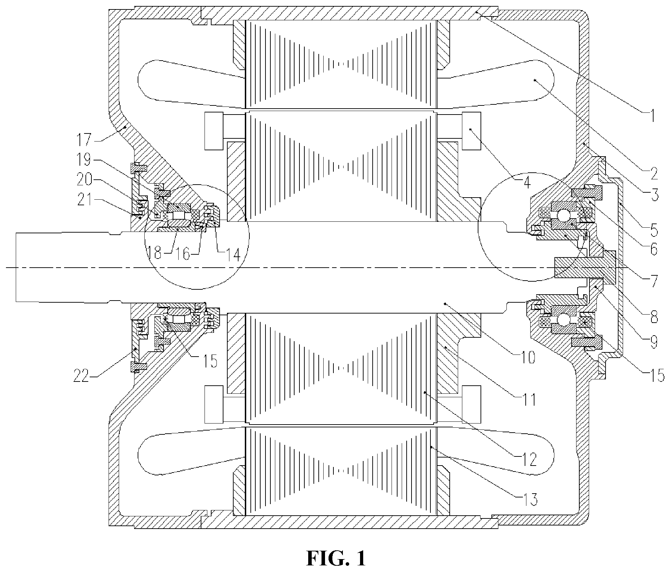

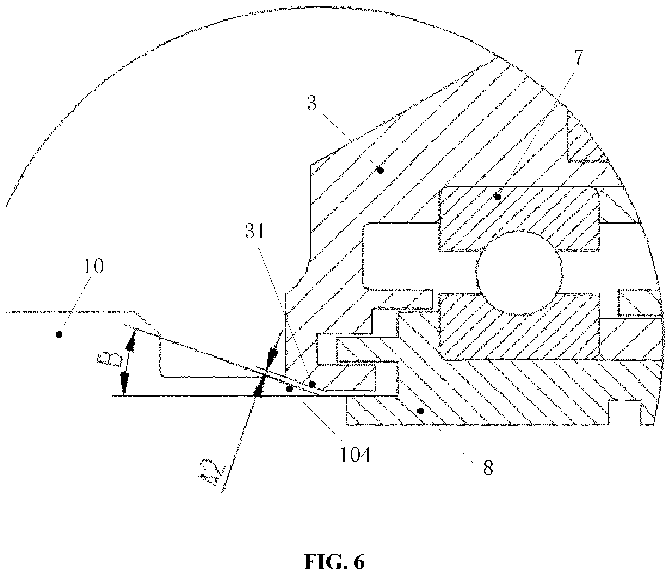

Referring to FIG. 1 to FIG. 6, the motor structure provided by the embodiment of the present application includes: a transmission shaft 10, a transmission-side assembly and a non-transmission-side assembly;
the transmission-side assembly includes: a transmission-side inner oil seal 14, a support ring 16, a transmission-side cover 17 and a cylindrical bearing 19; the support ring 16 is sleeved on the transmission shaft 10; an outer peripheral surface of an inner end of the support ring 16 is provided with a first inclined surface 162 with an angle A, which is higher outside and lower inside, an inner wall of the bearing reservoir of the transmission-side cover 17 is provided with a second inclined surface 172 parallel to the first inclined surface 162, in an assembled state, a distance between the first inclined surface 162 and the second inclined surface 172 is Δ 1; a first inner end surface 163 of the support ring 16 is abutted against a first step 101 of the transmission shaft 10, and there is a gap between the first inner end surface 163 and a second outer end surface 141 of the transmission-side inner oil seal 14; a first outer end surface 161 of the support ring 16 is connected to the shaft sleeve 18; the cylindrical bearing 19 is interposed between the transmission-side cover 17 and the shaft sleeve 18; it can be understood that in this solution, the direction of each component close to the rotor 12 refers to the inner end, and the direction of each component away from the rotor 12 refers to the outer end rotating shaft; the shaft sleeve 18 is sleeved on the transmission shaft 10;
the non-transmission-side assembly includes: a non-transmission-side cover 3, a ball bearing 7 and a non-transmission-side shaft sleeve 8; the non-transmission-side shaft sleeve 8 is sleeved on the transmission shaft 10; a third inner end surface 81 of the non-transmission-side shaft sleeve 8 is abutted against a third step 103 of the transmission shaft 10; the transmission shaft 10 is provided with a third inclined surface 104 closed to the third step 103, the third inclined surface 104 is in the same inclination direction as the first inclined surface 162 with an angle B, an inner wall of a tail of the non-transmission-side cover 3 is provided with a fourth inclined surface 31 parallel to the third inclined surface 104; in the assembled state, a distance between the third inclined surface 104 and the fourth inclined surface 31 is Δ2; the ball bearing 7 is mounted between the non-transmission-side cover 3 and the non-transmission-side shaft sleeve 8, and the inner end of the ball bearing is abutted against a step of the shaft sleeve 82 of the non-transmission-side shaft sleeve 8, so as to push the fourth inclined surface 31 of the non-transmission-side cover 3 toward the third inclined surface 104 of the rotating shaft 10 as the rotating shaft 10 is moved to the transmission-side (the left side in the figure), and reduce the distance between the two inclined surfaces until they are in contact;
the angle A is less than or equal to the angle B, both the opening of the angles are directed to the transmission side, the distance Δ1 = Δ2, and Δ1 is not less than a radial labyrinth gap between the transmission-side inner oil seal 14 and the transmission-side cover 17, and Δ2 is not less than a radial labyrinth gap between the non-transmission-side cover 3 and the non-transmission-side shaft sleeve 8.

Preferably, the angle A and B should be close to the self-locking angle matched by two metal surfaces.

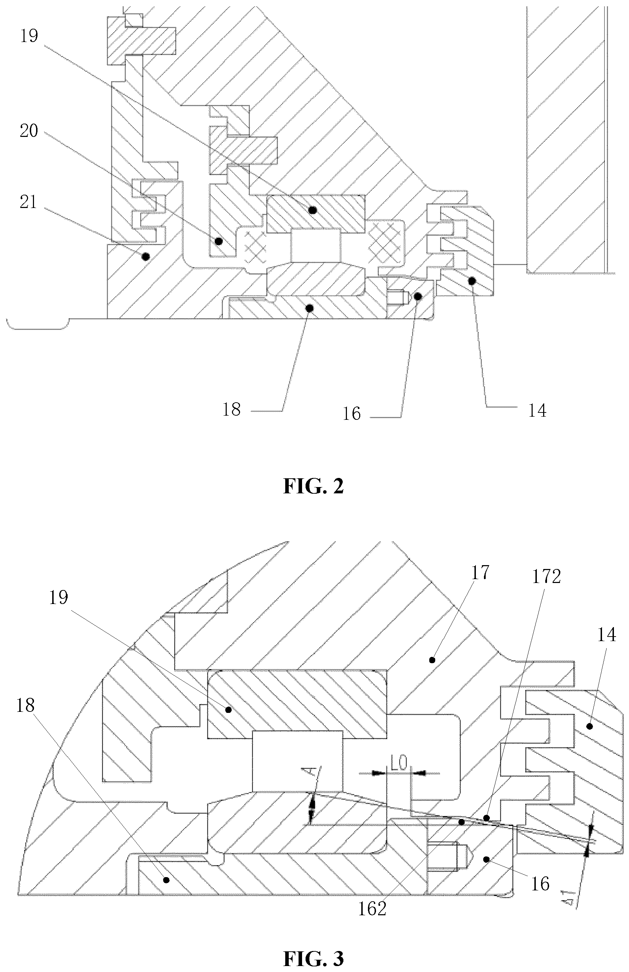

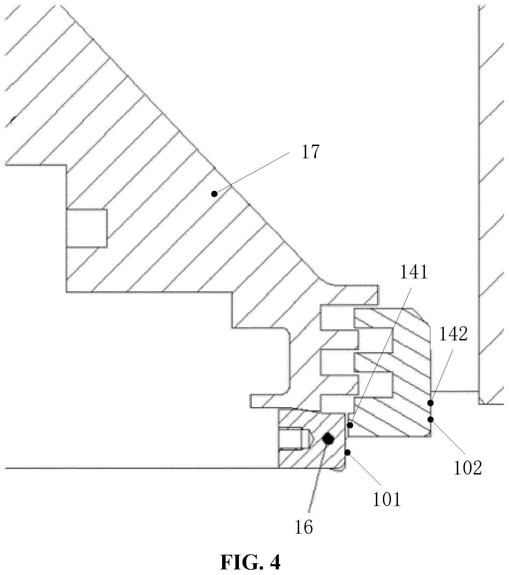

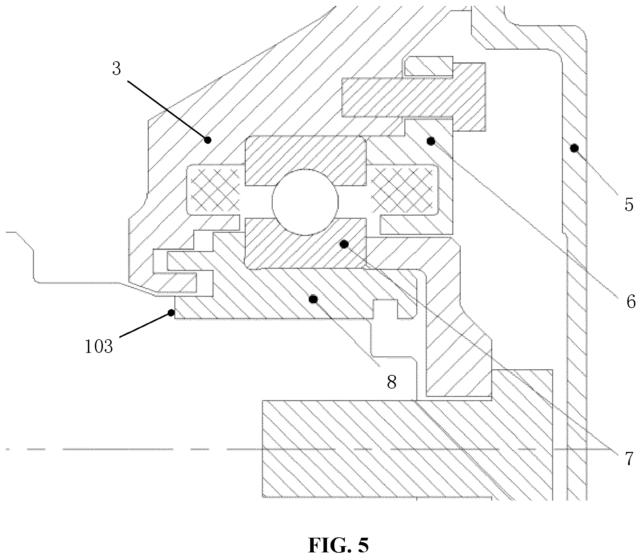

It should be noted that, when the motor is in the assembled state, the structure of the transmission-side assembly is shown in FIG. 2 and FIG. 3, where the distance between the first inclined surface 162 of the support ring 16 and the second inclined surface 172 of the transmission-side cover 17 is Δ1, which does not affect the labyrinth gap sealing effect. The structure of the non-transmission-side assembly is shown in FIG. 4 and FIG. 5, where the distance between the third inclined surface 104 on the transmission shaft 10 and the fourth inclined surface 31 of the non-transmission-side cover 3 is Δ2, which does not affect the labyrinth gap sealing effect.

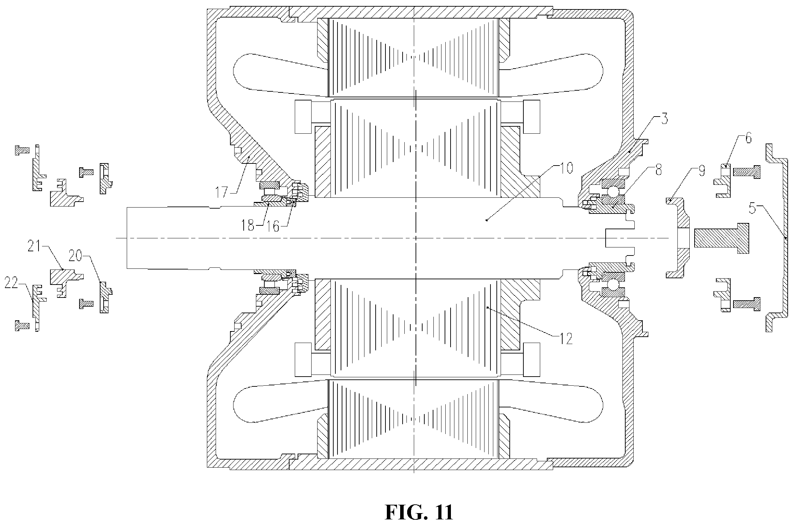

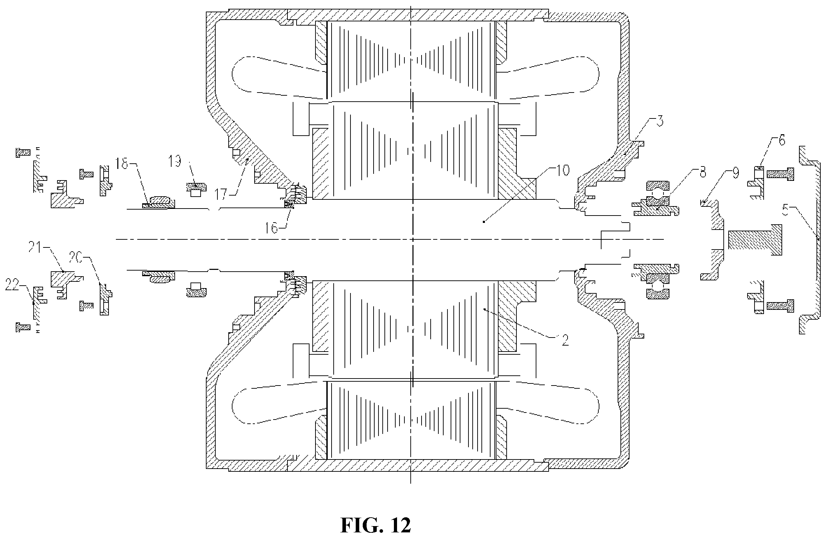

When disassembly is required, the ball bearing is firstly pulled out through the shaft sleeve 8, and the shaft sleeve 8 drives the ball bearing and the rotating shaft 10 to move synchronously to the transmission side (the left side in the figure), until the first inclined surface 162 of the support ring 16 is in contact with the second inclined surface 172 of the transmission-side cover 17, the third inclined surface 104 of the transmission shaft 10 is in contact with the fourth inclined surface 31 of the non-transmission-side cover 3 while the rotor 12 is fixed, and the disassembled structure of which can be shown in FIG. 11. Meanwhile, since the inclination directions of angle A and angle B are the same, and A≤B, it ensures that the third inclined surface 104 located on the transmission shaft 10 and the fourth inclined surface 31 of the non-transmission-side cover 3 can be in contact with each other, and the structure of which in the disassembled state can be shown in FIG. 4;
when the bearing needs to be replaced, the ball bearing 7 can be brought out just by pulling out the sleeve 8; similarly, the inner ring of the cylindrical bearing 19 can be brought out just by pulling out the shaft sleeve 18 at the transmission side, and then the outer ring of the cylindrical bearing 19 can be pulled out by the corresponding tool; the disassembled structure of which can be shown in FIG. 12;

As can be seen from the above technical solution, the motor structure provided by the present application can realize supporting and self-locking at both ends, respectively, only by moving the rotating shaft 10 and the rotor 12 once in single direction, this operation is completed simultaneously with the process of pulling out the ball bearing 7, which is simple and reliable. The inclined-surfaces fit can provide axial and radial positioning at the same time. According to this solution, the end cover does not need to be disassembled; before disassembling the bearing, the rotor 13 can be supported and fixed to keep an even air gap, the motor structure of the present application can be used for permanent magnet motors to prevent the stator and rotor from attracting together. In addition, in this solution, the bearings at both ends are brought out by disassembling the shaft sleeves at both ends, so that the new bearings can be replaced, this structure solves a design problem that there is not enough space to mount the bearing pedestal on the end cover.

Preferably, a distance L0 between the inner wall end surface of the bearing reservoir of the transmission-side cover 17 and an inner end surface of the inner ring of the cylindrical bearing 19 is greater than Δ2/sin B, the structure of which can be shown in FIG. 3. As such, when the rotating shaft 10 is moved to the non-transmission side (the left side in the figure), it can better ensure the contact between the third inclined surface 104 and the fourth inclined surface 31. Accordingly, during operating, the horizontal displacement of the rotor 12 S = Δ2/SINB < l0 (the distance between the end surface of the C-type bearing reservoir of the transmission-side cover and the inner end surface of the bearing inner ring).

Further, a second inner end surface142 of the transmission-side inner oil seal 14 is abutted against the second step 102 of the transmission shaft 10. With such design, when the rotating shaft 10 is moved to the transmission side (the right side in the figure), the transmission-side inner oil seal 14 will be pushed against the support ring 16 and away from the transmission-side cover 17, so that a distance between the first inclined surface 162 and the second inclined surface 172 is produced, which is up to Δ1. In case that said distance is Δ1, the rotating shaft 10 is returned so as to be in centering and thus back to the assembly state above.

In this solution, an outer wall of the transmission-side shaft sleeve 18 and an outer wall of the non-transmission-side shaft sleeve 8 are both provided with disassembly and assembly structures.

Preferably, the disassembly and assembly structure includes:
an external thread 181, which is arranged in the outer wall of the shaft sleeve 18 and between the first inclined surface 162 and the first outer end surface 172; and
a groove 83, which is arranged in the inner wall of the non-transmission-side shaft sleeve 8 and close to the third outer end surface 84 of the non-transmission-side shaft sleeve 8. As such, the support ring 16 and the ball bearing 7 can be replaced only by conventional tools, which has the characteristics of simple replacement means and various applicable disassembly tools.

Specifically, the transmission-side assembly further includes: a cylindrical bearing accessory abutted against an outer end of the cylindrical bearing 19;
the cylindrical bearing accessory includes: a transmission-side bearing cover 20, a transmission-side outer oil seal 21 and a transmission-side bearing outer cover 22;
the transmission-side bearing outer cover 22 is mounted at the outer end of the transmission-side outer oil seal 21, and the structure of the transmission-side bearing outer cover 22 can be shown in FIG.1 and FIG.2. With such design, before the maintenance to the cylindrical bearing 19, it only needs to remove the transmission-side bearing outer cover 22, the fastening bolts and the transmission-side outer oil seal 21; the inner ring of the cylindrical bearing 19 can be separated from the transmission shaft 10 by the shaft sleeve 18, and then the outer ring can be automatically separated from the transmission-side cover 17 by using certain tools, which is simple in structure and convenient to operate.

The non-transmission-side assembly further includes: a ball bearing accessory abutted against an outer end of the ball bearing 7;
the ball bearing accessory includes: a non-transmission-side bearing outer cover 5, a non-transmission-side bearing cover 6, and a non-transmission-side outer oil seal 9;
the non-transmission-side bearing cover 6 and the non-transmission-side outer oil seal 9 are abutted against the outer end of the ball bearing 7; the non-transmission-side bearing cover 6 is provided with a first connecting hole for connecting with the rotating shaft 10; the non-transmission-side outer oil seal 9 is provided with a second connecting hole for connecting with the non-transmission-side cover 3; the non-transmission-side bearing outer cover 5 is mounted at the outer ends of the non-transmission-side bearing cover 6 and the non-transmission-side outer oil seal 9. The structure can be shown in FIG. 1 and FIG. 5, with such design, before the maintenance to the ball bearing 7, it only needs to remove the non-transmission-side bearing outer cover 5 and the fastening bolts, the non-transmission-side outer oil seal 9, and the non-transmission-side bearing cover 6. The inner ring of the ball bearing 7 can be separated from the rotating shaft 10 by the non-transmission-side sleeve 8, and meanwhile the outer ring can be driven to be automatically separated from the non-transmission-side cover 3, and the structure is simple and the operation is convenient.

This solution is further introduced with the following specific examples: the technical solution of the present application is suitable for all types of traction motors, and the rotor is supported and fixed by the common parts on the motors, without affecting the performance and function of the parts. Regarding the configuration of bearing structure, two shaft sleeves matched with the bearing inner ring are arranged on the rotating shaft, and one support ring is new added. According to the specific structure and disassembly target of the motor, the following bearing replacement methods and technical solutions are proposed.

The main structure is: an oil seal inclined surface (to support the positioning end) + a support ring (to support the floating end) + shaft sleeves at both ends (to realize the automatically separation of the bearing inner ring and the rotating shaft). This solution is applicable to two-bearing motors (bearings at both ends), where the inner ring of the positioning end ball bearing is firstly pulled out by the shaft sleeve 8, while the rotor is driven to move in the direction of the positioning end ball bearing (one-way and one-time). When the distance by pulling out the ball bearing is greater than S (S=Δ2/sin B), the rotor is then supported and fixed by the support ring and the inclined surface of the oil seal. When the ball bearing is being pulled continuously, the outer ring of the bearing is separated from the non-transmission-side cover, and finally the ball bearing is pulled out completely. Then the shaft sleeve is pulled out in order to move the inner ring of the cylindrical bearing, and then the outer ring of the cylindrical bearing is disassembled with corresponding tools so as to complete the disassembly of the bearings at both ends. The specific structure is shown in FIG. 1, FIG. 2 and FIG. 6.

The non-positioning end (cylindrical bearing side) is provided with a support ring 16 that can be dissembled separately, and a raised inclined surface with an angle A. The inner wall of the bearing reservoir of the transmission-side cover 17 is provided with an inclined surface of a corresponding size, and the distance between these two inclined surfaces is Δ1. The labyrinth inner wall of the non-transmission-side cover 3 at the positioning end (ball bearing side) is provided with an inclined surface with an angle B in the same direction as the inclined surface with an angle A, The rotating shaft 10 is provided with a shaft shoulder in form of inclined surface with a corresponding size, and the distance between the two inclined surfaces is Δ2.

The inclination directions of angle A and angle B are the same, and A ≤ B; the positioning ends are ensured to be in contact. Δ1 and Δ2 are not less than the normal labyrinth clearance (generally 0.5). An internal thread for disassembling and pulling out is arranged on the support ring, an external thread for disassembling and pulling out is arranged on the floating end shaft sleeve, and a groove for disassembling and pulling out is arranged on the positioning end shaft sleeve. The horizontal displacement of the rotor S = Δ2/SINB < l0 (the distance between the end surface of the C-type bearing reservoir of the transmission-side cover and the inner end surface of the bearing inner ring).

The disassembling and mounting processes are as follows:
a) disassembling the bearing outer covers 5 and 22 and the fastening bolts, the outer oil seals 9 and 21 at both ends, the non-transmission-side bearing cover 6 and the transmission-side bearing cover 20;
b) pulling out the shaft sleeve 8 of the positioning end to drive the rotor 12 to move toward the positioning end until the two pairs of inclined surfaces are in contact with each other while the rotor is fixed;
c) continue to pull out the shaft sleeve 8 of the positioning end to bring out the ball bearing 7, and then pull out the shaft sleeve 18 of the transmission-side to bring out the inner ring of the cylindrical bearing 19, and pull out the outer ring of the floating end bearing with the tooling;
d) cleaning the bearing housing at both ends and add new grease in order to press in a new bearing;
e) mounting the inner ring of the new bearing (with shaft sleeve) at the floating end in place, and then pressing the outer ring of the bearing into place;
f) pressing the new bearing at the positioning end into the bearing sleeve 18;
g) pressing the inner ring of the new bearing (with shaft sleeve) at the positioning end to the theoretical position;
h) pressing the outer ring of the new bearing at the positioning end to the theoretical position and tighten it, and thus the rotor is pushed to the floating end to be in centering, and the bearing is replaced.

To sum up, the key points and claimed items of the present application are:
1) the rotor does not need to be supported separately, but is supported with the movement of the ball bearing at the positioning end. That is, the pulling out of the ball bearing and the supporting and positioning to the rotor are combined together in the same action, and the operation is simple.
2) the support parts of the rotor are simple in structure with a good versatility, which is with little change compared with the structure of the traditional motor.

In this solution, fixing of the rotor and separation of the bearings are realized with the least structural parts and the most general structure, the technical transformation and upgrading to the existing motor makes it possible to disassemble the bearing without separating the stator and rotor, which is relatively easy, wide in application and low in transformation cost.

The above embodiments are described in a progressive manner. Each of the embodiments is mainly focused on describing its differences from other embodiments, and reference may be made among these embodiments with respect to the same or similar parts.

## Claims

1. A motor structure, comprising: a transmission shaft (10), a transmission-side assembly and a non-transmission-side assembly;
wherein the transmission-side assembly comprises: a transmission-side inner oil seal (14), a support ring (16), a transmission-side cover (17), a shaft sleeve (18) and a cylindrical bearing (19); wherein the support ring (16) is sleeved on the transmission shaft (10);
**characterized in that**, an outer peripheral surface of an inner end of the support ring (16) proximal to the transmission-side inner oil seal (14) is provided with a first inclined surface (162), a distance between the first inclined surface (162) and the transmission shaft (10) is gradually reduced in a direction towards the transmission-side inner oil seal (14), and an angle A is formed between the first inclined surface (162) and an axis of the transmission shaft (10), an inner wall of a bearing reservoir formed by the transmission-side cover (17) towards the support ring (16) and proximal to the transmission-side inner oil seal (14) is provided with a second inclined surface (172) parallel to the first inclined surface (162), in an assembled state, a distance between the first inclined surface (162) and the second inclined surface (172) is Δ1; wherein a first inner end surface (163) of the support ring (16) is abutted against a first step (101) of the transmission shaft (10), and there is a gap between the first inner end surface (163) and a second outer end surface (141) of the transmission-side inner oil seal (14); wherein a first outer end surface (161) of the support ring (16) is connected to the shaft sleeve (18); wherein the cylindrical bearing (19) is interposed between the transmission-side cover (17) and the shaft sleeve (18), and an inner end of the cylindrical bearing is abutted with the shaft sleeve (18); wherein the shaft sleeve (18) is sleeved on the transmission shaft (10);
wherein the non-transmission-side assembly comprises: a non-transmission-side cover (3), a ball bearing (7) and a non-transmission-side shaft sleeve (8); wherein the non-transmission-side shaft sleeve (8) is sleeved on the transmission shaft (10); wherein a third inner end surface (81) of the non-transmission-side shaft sleeve (8) is abutted against a third step (103) of the transmission shaft (10); wherein the transmission shaft (10) is provided with a third inclined surface (104), close to the third step (103), with a same inclination direction as the first inclined surface (162) and an angle B, an inner wall of a tail end of the non-transmission-side cover (3) is provided with a fourth inclined surface (31) parallel to the third inclined surface (104);
wherein, in the assembled state, a distance between the third inclined surface (104) and the fourth inclined surface (31) is Δ2; wherein the ball bearing (7) is interposed between the non-transmission-side cover (3) and the non-transmission-side shaft sleeve (8), and the inner end of the ball bearing is abutted against a step of the shaft sleeve (82) of the non-transmission-side shaft sleeve (8);
wherein the angle A is less than or equal to the angle B, both the openings of the angles A and B are directed to the transmission side, the distance Δ1 = Δ2, wherein Δ1 is not less than a radial labyrinth gap between the transmission-side inner oil seal (14) and the transmission-side cover (17), and Δ2 is not less than a radial labyrinth gap between the non-transmission-side cover (3) and the non-transmission-side shaft sleeve (8).

2. The motor structure according to claim 1, wherein a distance L0 between the inner wall end surface of the bearing reservoir of the transmission-side cover (17) and an inner end surface of the inner ring of the cylindrical bearing (19) is greater than Δ2/sin B.

3. The motor structure according to claim 1, wherein a second inner end surface (142) of the transmission-side inner oil seal (14) is abutted against a second step (102) of the transmission shaft (10).

4. The motor structure according to claim 1, wherein an outer wall of the transmission-side shaft sleeve (18) and an outer wall of the non-transmission-side shaft sleeve (8) are both provided with disassembly and assembly structures.

5. The motor structure according to claim 4, wherein the disassembly and assembly structure comprises:
an external thread (181) arranged in an outer wall of the shaft sleeve (18) and between the first inclined surface (162) and the first outer end surface (172);
a groove (83) arranged in an inner wall of the non-transmission-side shaft sleeve (8) and close to the third outer end surface (84) of the non-transmission-side shaft sleeve (8).

6. The motor structure according to claim 1, wherein the transmission-side assembly further comprises: a cylindrical bearing accessory abutted against an outer end of the cylindrical bearing (19);
wherein the cylindrical bearing accessory comprises: a transmission-side bearing cover (20), a transmission-side outer oil seal (21) and a transmission-side bearing outer cover (22);
wherein the transmission-side bearing outer cover (22) is mounted at the outer end of the transmission-side outer oil seal (21).

7. The motor structure according to claim 1, wherein the non-transmission-side assembly further comprises: a ball bearing accessory abutted against an outer end of the ball bearing (7);
wherein the ball bearing accessory comprises: a non-transmission-side bearing outer cover (5), a non-transmission-side bearing cover (6), and a non-transmission-side outer oil seal (9);
wherein the non-transmission-side bearing cover (6) and the non-transmission-side outer oil seal (9) are abutted against the outer end of the ball bearing; wherein the non-transmission-side bearing cover (6) is provided with a first connecting hole for connecting with the rotating shaft (10); wherein the non-transmission-side outer oil seal (9) is provided with a second connecting hole for connecting with the non-transmission-side cover (3); wherein the non-transmission-side bearing outer cover (5) is mounted at the outer ends of the non-transmission-side bearing cover (6) and the non-transmission-side outer oil seal (9).

8. A motor bearing replacement method, which is applied to the motor structure according to any one of claims 1-7, comprising the following steps:
disassembling the ball bearing (7) first, the rotating shaft (10) is moved toward the non-transmission side synchronously until the first inclined surface (162) of the support ring (16) is in contact with the second inclined surface (172) of the transmission-side cover (17); and then
disassembling the cylindrical bearing (19).

9. The motor bearing replacement method according to claim 8, wherein the step of disassembling the ball bearing (7) further comprises:
pulling out the non-transmission-side shaft sleeve (8) to move both the inner and outer rings of the ball bearing (7), while the rotating shaft (10) is moved toward the non-transmission side until the centering and fixing to the rotor (13) is complete.

10. The motor bearing replacement method according to claim 8, wherein before moving the rotating shaft (10) toward the non-transmission side, the method further comprises the following step:
removing the transmission-side bearing outer cover (22), the non-transmission-side bearing outer cover (5), the transmission-side outer oil seal (21), the non-transmission-side outer oil seal (9), the transmission-side bearing cover (20) and the non-transmission-side bearing cover (6).

## Patentansprüche

1. Motorstruktur, die Folgendes umfasst: eine Getriebewelle (10), eine getriebeseitige Anordnung und eine nicht-getriebeseitige Anordnung;
wobei die getriebeseitige Anordnung Folgendes umfasst: eine getriebeseitige innere Öldichtung (14), einen Stützring (16), eine getriebeseitige Abdeckung (17), eine Wellenbuchse (18) und ein zylindrisches Lager (19); wobei der Stützring (16) auf die Getriebewelle (10) aufgeschoben ist;
**dadurch gekennzeichnet, dass** eine Außenumfangsfläche eines inneren Endes des Stützrings (16) proximal der getriebeseitigen inneren Öldichtung (14) mit einer ersten schrägen Fläche (162) versehen ist, ein Abstand zwischen der ersten schrägen Fläche (162) und der Getriebewelle (10) in Richtung auf die getriebeseitige innere Öldichtung (14) allmählich verringert wird und zwischen der ersten schrägen Fläche (162) und einer Achse der Getriebewelle (10) ein Winkel A gebildet wird, eine Innenwand eines Lagerreservoirs, das durch die getriebeseitige Abdeckung (17) in Richtung auf den Stützring (16) und proximal zur getriebeseitigen inneren Öldichtung (14) gebildet wird, in einem zusammengebauten Zustand mit einer zur ersten schrägen Fläche (162) parallelen zweiten schrägen Fläche (172) versehen ist, ein Abstand zwischen der ersten schrägen Fläche (162) und der zweiten schrägen Fläche (172) Δ1 ist; wobei eine erste innere Endfläche (163) des Stützrings (16) an einer ersten Stufe (101) der Getriebewelle (10) anliegt und zwischen der ersten inneren Endfläche (163) und einer zweiten äußeren Endfläche (141) der getriebeseitigen inneren Öldichtung (14) ein Spalt vorhanden ist; wobei eine erste äußere Endfläche (161) des Stützrings (16) mit der Wellenbuchse (18) verbunden ist; wobei das zylindrische Lager (19) zwischen der getriebeseitigen Abdeckung (17) und der Wellenbuchse (18) liegend angeordnet ist und ein inneres Ende des zylindrischen Lagers an der Wellenbuchse (18) anliegt, wobei die Wellenbuchse (18) auf die Getriebewelle (10) aufgeschoben ist;
wobei die nicht-getriebeseitige Anordnung Folgendes umfasst: eine nicht-getriebeseitige Abdeckung (3), ein Kugellager (7) und eine nicht-getriebeseitige Wellenbuchse (8); wobei die nicht-getriebeseitige Wellenbuchse (8) auf die Getriebewelle (10) aufgeschoben ist; wobei eine dritte innere Endfläche (81) der nicht-getriebeseitigen Wellenbuchse (8) an einer dritten Stufe (103) der Getriebewelle (10) anliegt; wobei die Getriebewelle (10) mit einer dritten schrägen Fläche (104), nahe an der dritten Stufe (103), mit der gleichen Schrägenrichtung wie die erste schräge Fläche (162) und einem Winkel B versehen ist, eine Innenwand eines hinteren Endes der nicht-getriebeseitigen Abdeckung (3) mit einer zur dritten schrägen Fläche (104) parallelen vierten schrägen Fläche (31) versehen ist;
wobei im zusammengebauten Zustand ein Abstand zwischen der dritten schrägen Fläche (104) und der vierten schrägen Fläche (31) Δ2 ist; wobei das Kugellager (7) zwischen der nicht-getriebeseitigen Abdeckung (3) und der nicht-getriebeseitigen Wellenbuchse (8) liegend angeordnet ist und das innere Ende des Kugellagers an einer Stufe der Wellenbuchse (82) der nicht-getriebeseitigen Wellenbuchse (8) anliegt;
wobei der Winkel A kleiner oder gleich dem Winkel B ist, beide Öffnungen der Winkel A und B zur Getriebeseite gerichtet sind, der Abstand Δ1 = Δ2, wobei Δ1 nicht kleiner als ein Radiallabyrinthspalt zwischen der getriebeseitigen inneren Öldichtung (14) und der getriebeseitigen Abdeckung (17) ist und Δ2 nicht kleiner als ein Radiallabyrinthspalt zwischen der nicht-getriebeseitigen Abdeckung (3) und der nicht-getriebeseitigen Wellenbuchse (8) ist.

2. Motorstruktur nach Anspruch 1, wobei ein Abstand L0 zwischen der Innenwandendfläche des Lagerreservoirs der getriebeseitigen Abdeckung (17) und einer inneren Endfläche des Innenrings des zylindrischen Lagers (19) größer als Δ2/sin B.

3. Motorstruktur nach Anspruch 1, wobei eine zweite innere Endfläche (142) der getriebeseitigen inneren Öldichtung (14) an einer zweiten Stufe (102) der Getriebewelle (10) anliegt.

4. Motorstruktur nach Anspruch 1, wobei eine Außenwand der getriebeseitigen Wellenbuchse (18) und eine Außenwand der nicht-getriebeseitigen Wellenbuchse (8) beide mit Auseinanderbau- und Zusammenbaustrukturen versehen sind.

5. Motorstruktur nach Anspruch 4, wobei die Auseinanderbaustruktur und die Zusammenbaustruktur Folgendes umfassen:
ein Außengewinde (181), das in einer Außenwand der Wellenbuchse (18) und zwischen der ersten schrägen Fläche (162) und der ersten äußeren Endfläche (172) angeordnet ist;
eine Nut (83), die in einer Innenwand der nicht-getriebeseitigen Wellenbuchse (8) und nahe an der dritten äußeren Endfläche (84) der nicht-getriebeseitigen Wellenbuchse (8) angeordnet ist.

6. Motorstruktur nach Anspruch 1, wobei die getriebeseitige Anordnung ferner Folgendes umfasst: ein zylindrisches Lagerzubehör, das an einem äußeren Ende des zylindrischen Lagers (19) anliegt;
wobei das zylindrische Lagerzubehör Folgendes umfasst: eine getriebeseitige Lagerabdeckung (20), eine getriebeseitige äußere Öldichtung (21) und eine getriebeseitige äußere Lagerabdeckung (22);
wobei die getriebeseitige äußere Lagerabdeckung (22) am äußeren Ende der getriebeseitigen äußeren Öldichtung (21) montiert ist.

7. Motorstruktur nach Anspruch 1, wobei die nicht-getriebeseitige Anordnung ferner Folgendes umfasst: ein Kugellagerzubehör, das an einem äußeren Ende des Kugellagers (7) anliegt;
wobei das Kugellagerzubehör Folgendes umfasst: eine nicht -getriebeseitige äußere Lagerabdeckung (5), eine nicht-getriebeseitige Lagerabdeckung (6) und eine nicht-getriebeseitige äußere Öldichtung (9);
wobei die nicht-getriebeseitige Lagerabdeckung (6) und die nicht-getriebeseitige äußere Öldichtung (9) an dem äußeren Ende des Kugellagers anliegen; wobei die nicht-getriebeseitige Lagerabdeckung (6) mit einem ersten Verbindungsloch zum Verbinden mit der rotierenden Welle (10) versehen ist; wobei die nicht-getriebeseitige äußere Öldichtung (9) mit einem zweiten Verbindungsloch zum Verbinden mit der nicht-getriebeseitigen Abdeckung (3) versehen ist; wobei die nicht-getriebeseitige äußere Lagerabdeckung (5) am äußeren Ende der nicht-getriebeseitigen Lagerabdeckung (6) und der nicht-getriebeseitigen äußeren Öldichtung (9) montiert ist.

8. Motorlageraustauschverfahren, das auf die Motorstruktur nach einem der Ansprüche 1 bis 7 angewendet wird, umfassend die folgenden Schritte:
zunächst Auseinanderbauen des Kugellagers (7), dabei Verschieben der rotierenden Welle (10) zur Nicht-Getriebeseite hin, bis die erste schräge Fläche (162) des Stützrings (16) mit der zweiten schrägen Fläche (172) der getriebeseitigen Abdeckung (17) in Kontakt ist; und dann
Auseinanderbauen des zylindrischen Lagers (19).

9. Motorlageraustauschverfahren nach Anspruch 8, wobei der Schritt des Auseinanderbauens des Kugellagers (7) ferner Folgendes umfasst:
Abziehen der nicht-getriebeseitigen Wellenbuchse (8), um sowohl den inneren als auch den äußeren Ring des Kugellagers (7) zu verschieben, während die rotierende Welle (10) zur Nicht-Getriebeseite hin verschoben wird, bis das Zentrieren und Befestigen des Rotors (13) abgeschlossen ist.

10. Motorlageraustauschverfahren nach Anspruch 8, wobei das Verfahren vor dem Verschieben der rotierenden Welle (10) zur Nicht-Getriebeseite hin ferner den folgenden Schritt umfasst:
Entfernen der getriebeseitigen äußeren Lagerabdeckung (22), der nicht-getriebeseitigen äußeren Lagerabdeckung (5), der getriebeseitigen äußeren Öldichtung (21), der nicht-getriebeseitigen äußeren Öldichtung (9), der getriebeseitigen Lagerabdeckung (20) und der nicht-getriebeseitigen Lagerabdeckung (6).

## Revendications

1. Structure de moteur, comprenant : un arbre de transmission (10), un ensemble côté transmission et un ensemble côté non-transmission ;
dans laquelle l'ensemble côté transmission comprend : un joint d'huile interne côté transmission (14), une bague d'appui (16), un couvercle côté transmission (17), une chemise d'arbre (18) et un roulement cylindrique (19) ; dans lequel la bague d'appui (16) est emmanchée sur l'arbre de transmission (10) ;
**caractérisée en ce que**, une surface périphérique externe d'une extrémité interne de la bague d'appui (16) proximale au joint d'huile interne côté transmission (14) est pourvue d'une première surface inclinée (162), une distance entre la première surface inclinée (162) et l'arbre de transmission (10) est réduite progressivement dans une direction vers le joint d'huile interne côté transmission (14), et un angle A est formé entre la première surface inclinée (162) et un axe de l'arbre de transmission (10), une paroi interne d'un réservoir de palier formée par le couvercle côté transmission (17) vers la bague d'appui (16) et proximale au joint d'huile interne côté transmission (14) est pourvue d'une deuxième surface inclinée (172) parallèle à la première surface inclinée (162), dans un état assemblé, une distance entre la première surface inclinée (162) et la deuxième surface inclinée (172) est Δ1 ;
dans laquelle une première surface d'extrémité interne (163) de la bague d'appui (16) est en butée contre un premier épaulement (101) de l'arbre de transmission (10), et il y a un écart entre la première surface d'extrémité interne (163) et une deuxième surface d'extrémité externe (141) du joint d'huile interne côté transmission (14), dans laquelle une première surface d'extrémité externe (161) de la bague d'appui (16) est raccordée à la chemise d'arbre (18) ; dans laquelle le roulement cylindrique (19) est interposé entre le couvercle côté transmission (17) et la chemise d'arbre (18), et une extrémité interne du roulement cylindrique est en butée contre la chemise d'arbre (18) ;
dans laquelle la chemise d'arbre (18) est emmanchée sur l'arbre de transmission (10) ;
dans laquelle l'ensemble côté non-transmission comprend un couvercle côté non-transmission (3), un roulement à billes (7) et une chemise d'arbre côté non-transmission (8) ; dans laquelle la chemise d'arbre côté non-transmission (8) est emmanchée sur l'arbre de transmission (10), dans laquelle une troisième surface d'extrémité interne (81) de la chemise d'arbre côté non-transmission (8) est en butée contre un troisième épaulement (103) de l'arbre de transmission (10) ; dans laquelle l'arbre de transmission (10) est pourvu d'une troisième surface inclinée (104), proche du troisième épaulement (103), avec une même direction d'inclinaison que la première surface inclinée (162) et un angle B, une paroi interne d'une extrémité arrière du couvercle côté non-transmission (3) est pourvue d'une quatrième surface inclinée (31) parallèle à la troisième surface inclinée (104) ;
dans laquelle, à l'état assemblé, une distance entre la troisième surface inclinée (104) et la quatrième surface inclinée (31) est Δ2 ; dans laquelle le roulement à billes (7) est interposé entre le couvercle côté non-transmission (3) et la chemise d'arbre côté non-transmission (8), et l'extrémité interne du roulement à billes est en butée contre un épaulement de la chemise d'arbre (82) de la chemise d'arbre côté non-transmission (8) ;
dans laquelle l'angle A est moindre ou égal à l'angle B, les deux ouvertures des angles A et B sont orientées vers le côté transmission, la distance Δ1 = Δ2, dans laquelle Δ1 n'est pas moins qu'un jeu labyrinthique radial entre le joint d'huile interne côté transmission (14) et le couvercle côté transmission (17), et Δ2 n'est pas moins qu'un jeu labyrinthique radial entre le couvercle côté non-transmission (3) et la chemise d'arbre côté non-transmission (8).

2. Structure de moteur selon la revendication 1, dans laquelle une distance L0 entre la surface d'extrémité de la paroi interne du réservoir de roulement du couvercle côté transmission (17) et une surface d'extrémité interne de la bague intérieure du roulement cylindrique (19) est plus grande que Δ2/sin B.

3. Structure de moteur selon la revendication 1, dans laquelle une deuxième surface d'extrémité interne (142) du joint d'huile interne côté transmission (14) est en butée contre un deuxième épaulement (102) de l'arbre de transmission (10).

4. Structure de moteur selon la revendication 1, dans laquelle une paroi externe de la chemise d'arbre côté transmission (18) et une paroi externe de la chemise d'arbre côté non-transmission (8) sont toutes les deux pourvues de structures de démontage et d'assemblage.

5. Structure de moteur selon la revendication 4, dans laquelle la structure de démontage et d'assemblage comprend :
un filetage externe (181) disposé sur une paroi externe de la chemise d'arbre (18) et entre la première surface inclinée (162) et la première surface d'extrémité externe (172) ;
une rainure (83) disposée dans une paroi interne de la chemise d'arbre côté non-transmission (8) et proche de la troisième surface d'extrémité externe (84) de la chemise d'arbre côté non-transmission (8).

6. Structure de moteur selon la revendication 1, dans laquelle l'ensemble côté transmission comprend en outre : un accessoire de roulement cylindrique en butée contre une extrémité externe du roulement cylindrique (19) ;
dans laquelle l'accessoire de roulement cylindrique comprend : un couvercle de roulement côté transmission (20), un joint d'huile externe côté transmission (21) et un couvercle externe de roulement côté transmission (22) ;
dans laquelle le couvercle externe côté transmission (22) est monté à l'extrémité externe du joint d'huile externe côté transmission (21).

7. Structure de moteur selon la revendication 1, dans laquelle l'ensemble côté non-transmission comprend en outre un accessoire de roulement à billes en butée contre une extrémité externe du roulement à billes (7) ;
dans laquelle l'accessoire de roulement à billes comprend : un couvercle externe de roulement côté non-transmission (5), un couvercle de roulement côté non-transmission (6), et un joint d'huile externe côté non-transmission (9) ;
dans laquelle le couvercle de roulement côté non-transmission (6) et le joint d'huile externe côté non-transmission (9) sont en butée contre l'extrémité externe du roulement à billes ; dans laquelle le couvercle de roulement côté non-transmission (6) est pourvu d'un premier orifice de raccordement pour raccordement avec l'arbre rotatif (10) ; dans laquelle le joint d'huile externe côté non-transmission (9) est pourvu d'un deuxième orifice de raccordement pour raccordement avec le couvercle côté non-transmission (3) ; dans laquelle le couvercle externe de roulement côté non-transmission (5) est monté aux extrémités externes du couvercle de roulement côté non-transmission (6) et du joint d'huile externe côté non-transmission (9).

8. Procédé de remplacement de roulement de moteur, qui est appliqué à la structure de moteur selon l'une quelconque des revendications 1-7, comprenant les étapes suivantes :
démonter le roulement à billes (7) premièrement, l'arbre rotatif (10) est déplacé vers le côté non-transmission de manière synchrone jusqu'à ce que la première surface inclinée (162) de la bague d'appui (16) soit en contact avec la deuxième surface inclinée (172) du couvercle côté transmission (17) ; et puis
démonter le roulement cylindrique (19).

9. Procédé de remplacement de roulement de moteur selon la revendication 8, dans lequel l'étape de démontage du roulement à billes (7) comprend en outre :
retirer la chemise d'arbre côté non-transmission (8) afin d'enlever les bagues intérieure et extérieure du roulement à billes (7) toutes les deux, pendant que l'arbre rotatif (10) est déplacé vers le côté non-transmission jusqu'à ce que le centrage et la fixation au rotor (13) soient terminés.

10. Procédé de remplacement de roulement de moteur selon la revendication 8, dans lequel avant de déplacer l'arbre rotatif (10) vers le côté non-transmission, le procédé comprend en outre l'étape suivante :
retirer le couvercle externe de roulement côté transmission (22), le couvercle externe de roulement côté non-transmission (5), le joint d'huile externe côté transmission (21), le joint d'huile externe côté non-transmission (9), le couvercle de roulement côté transmission (20) et le couvercle de roulement côté non-transmission (6).
